# EUROPÄISCHE PATENTSCHRIFT

(11) **EP 1 036 802 B1**
(45) Veröffentlichungstag und Bekanntmachung des Hinweises auf die Patenterteilung: **02.01.2002**
(21) Anmeldenummer: 00104416.3
(22) Anmeldetag: 02.03.2000
(51) Int. Cl.: C08F 220/12, C09J 133/06

(54) **Verfahren zur Herstellung einer wässrigen Polymerdispersion für wiederablösbare Haftkleberfilme**
Process for preparing an aqueous polymerdispersion for removable ahhesive tape
Procédé de préparation d'une dispersion aqueuse pour bande adhésive détachable

(30) Priorität: 18.03.1999 DE 19912253
(43) Veröffentlichungstag der Anmeldung: 20.09.2000
(73) Patentinhaber: Wacker-Chemie GmbH, 81737 München (DE)
(72) Erfinder: Hashemzadeh, Abdulmajid, Dr., 84508 Burgkirchen (DE); Gurau, Mihai, Dr., 84489 Burghausen (DE); Weissgerber, Rudolf, Dr., 84489 Burghausen (DE); Dobler, Walter, 84367 Tann (DE)
(74) Vertreter: Schuderer, Michael, Dr.

(56) Entgegenhaltungen:
- EP-A- 0 224 795
- WO-A-90/06976
- WO-A-95/04763
- US-A- 4 833 179

## Beschreibung

Die Erfindung betrifft ein Verfahren zur Herstellung einer einer wäßrigen Polymerdispersion für wiederablösbare Haftkleberfilme mittels radikalisch initiierter, wäßriger Emulsionspolymerisation.

Haftklebemittel auf der Basis von wäßrigen Polymerdispersionen sind seit langem bekannt. Beispiele für damit herstellbare, haftklebende Artikel sind Etiketten und Klebebänder. Aus der US-A 2,884,126 sind beispielsweise Haftkleber auf Acrylatbasis mit 3 bis 12 % an polaren Comonomeren bekannt. Die US-A 4,181,752 beschreibt UV-vernetzte Haftklebemittel auf Acrylatbasis mit einem Gehalt von 2 bis 30 % polaren Comonomeren. In den genannten Anwendungsgebieten ist es erwünscht, daß sich der Klebefilm auch nach längerer Zeit noch möglichst rückstandsfrei vom Substrat ablösen läßt. Problematisch ist dabei, daß bei herkömmlichen Haftkleberzusammensetzungen, wie sie oft zur Herstellung von Etiketten oder Klebebändern eingesetzt werden, normalerweise die Schälfestigkeit mit der Zeit so stark zunimmt, daß diese sich nicht einfach vom Substrat abtrennen lassen. Bei der Abtrennung werden die Träger abgerissen, und/oder große Teile der Klebstoffmasse (Klebstofffilm) bleiben am Substrat haften. Dieses Problem kommt insbesondere bei großflächigen Systemen, beispielsweise beim Verkleben von Teppichen mit Teppichverlegebändern vor. Die anhaftende Klebstoffmasse am Boden oder Parkett muß dann durch aufwendige Reinigung mit organischen Lösungsmitteln entfernt werden.

Die US-A 4,599,265 beschreibt wiederablösbare Haftkleber auf Acrylatbasis mit bis zu 3 % polaren Comonomeren, deren Wiederablösbarkeit durch UV-Vernetzung sichergestellt wird. In der EP-A 224795 wird über frühere Versuche im Stand der Technik berichtet, die Wiederablösbarkeit durch Zusatz von Weichmacher zum Haftkleber oder durch Copolymerisation von vernetzbaren Comonomeren zu verbessern. Es wird empfohlen zur Verbesserung der Wiederablösbarkeit silanfunktionelle Comonomere zu copolymerisieren. Von der Copolymerisation von polaren Monomeren in wiederablösbaren Haftklebemitteln wird ausdrücklich abgeraten. In der EP-B 287306 werden zur Herstellung von wiederablösbaren Haftklebern Phosphat-Emulgatoren und copolymerisierbare Emulgatoren eingesetzt. Die EP-A 736585 rät ebenfalls ab von der Copolymerisation von polaren Comonomeren in Haftklebern für wiederablösbare Haftkleberfilm. Es werden Copolymer-Zusammensetzungen empfohlen, welche durch Polymerisation einer Precursor-Mischung erhalten werden, welche Acrylatmonomere ohne polare Comonomere, sowie hydrophobe Kieselsäure und Vernetzer enthält.

Die WO-A 90/06976 betrifft wiederablösbare Haftkleberfilme mit einem definierten Gelgehalt, welcher dadurch erhalten wird, daß vernetzbare, multifunktionelle Comonomere copolymerisiert werden. Diese vernetzbaren Comonomere werden in Kombination mit polaren Comonomeren in die Alkylacrylatcopolymere eingebaut. Dieser Schrift ist kein Hinweis zu entnehmen, ausgerechnet auf diese multifunktionellen, vernetzbaren Comonomere zu verzichten, welche als essentiell für die Wiederablösbarkeit betrachtet werden

Die EP-A 224795 lehrt zur Herstellung von wiederablösbaren Haftkleberfilmen organofunktionelle Silanmonomere cozupolymerisieren um den Tack zu erhöhen und die Erhöhung der Adhäsion bei Alterung zu vermeiden. Der Verzicht auf ausgerechnet diesen Silananteil und die Copolymerisation von definierten, geringen Mengen an polarem Comonomer wird nicht vorgeschlagen. Ganz im Gegenteil, von polaren Comonomeren wird ausdrücklich abgeraten.

Die WO-A 95/04763 betrifft Haftklebemittel auf Basis von Polyacrylsäureester mit verbesserter Lösungsmittelbeständigkeit. Zum Erhalt der verbesserten Lösungsmittelfestigkeit werden Polymerisate mit einem hohen Gehalt an carboxyalkyl- oder hydroxyalkyl-funktionellen Comonomeren eingesetzt. Dieser Schrift liegt eine grundsätzlich andere Aufgabe zugrunde, nämlich die Herstellung von Lösungmittel-festen Klebemitteln, welche mittels Copolymerisation großer Mengen an carboxyalkyl- oder hydroxyalkyl-funktionellen Comonomeren gelöst wird. Dies kann nicht nahelegen wiederablösbare Verklebungen durch Copolymerisation von geringen Mengen an polaren ionischen oder polaren nichtionischen Comonomeren zu erhalten. Aufgabe dieser Erfindung war es, ein wäßriges Dispersionssystem für die Anwendung bei verschiedensten haftklebenden Artikeln im Etiketten- und Klebebandsektor zur Verfügung zu stellen, welches eine hohe Kohäsion besitzt und bei dem die Schälfestigkeit nach Alterung bzw. längeren Verklebungszeiten nicht stark anwächst, so daß sich die Artikel praktisch rückstandsfrei wieder ablösen lassen.

Gegenstand der Erfindung ist ein Verfahren zur Herstellung einer wäßrigen Polymerdispersion für wiederablösbare Haftkleberfilme mittels radikalisch initiierter, wäßriger Emulsionspolymerisation von einem oder mehreren ethylenisch ungesättigten Monomeren aus der Gruppe umfassend Ester der Acrylsäure und Methacrylsäure mit unverzweigten oder verzweigten Alkoholen mit 1 bis 12 C-Atomen, Vinylester von unverzweigten oder verzweigten Carbonsäuren mit 1 bis 12 C-Atomen, Vinylaromaten, Vinylhalogenide, Olefine und Diene, wobei vernetzende, multifunktionelle Acrylate und organofunktionelle Silanmonomere ausgeschlossen sind, in solchen Gewichtsanteilen, daß eine Glasübergangstemperatur Tg der Polymerisate von -60°C bis 0°C resultiert, dadurch gekennzeichnet, daß a) 0.01 bis 1.0 Gew.-% eines oder mehrerer, polarer, ionischer Comonomere aus der Gruppe umfassend ethylenisch ungesättigte Mono- und Dicarbonsäure sowie ethylenisch ungesättigte Sulfonsäuren, oder b) 0.01 bis 2.0 Gew.-% eines oder mehrerer, polarer, nichtionischer Comonomere aus der Gruppe umfassend ethylenisch ungesättigte Carbonsäureamide und -nitrile, oder
c) 0.01 bis 2.0 Gew.-% deren Gemische copolymerisiert werden, wobei bei der Copolymerisation von polaren, ionischen Comonomeren im Gemisch, deren Anteil maximal 1.0 Gew.-% beträgt, und die Angaben in Gew.-% jeweils auf das Gesamtgewicht der Comonomere bezogen sind.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, Ethylacrylat, n-Butylacrylat und 2-Ethylhexylacrylat.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.
Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1.3-Butadien und Isopren.

Besonders bevorzugt sind Comonomerzusammensetzungen bei denen der Anteil der Ester der Acrylsäure und Methacrylsäure mit unverzweigten oder verzweigten Alkoholen mit 1 bis 12 C-Atomen ≥ 50 Gew.-% beträgt. Am meisten bevorzugte Comonomergemische, welche die genannten Anteile an polaren ionischen und nichtionischen Comonomeren enthalten, sind solche mit Ethylacrylat oder n-Butylacrylat oder 2-Ethylhexylacrylat, oder Gemische von Methylmethacrylat mit n-Butylacrylat und/oder 2-Ethylhexylacrylat, oder Gemische von Methylmethacrylat mit n-Butylacrylat und/oder Ethylacrylat, oder Gemische von Methylmethacrylat mit 1,3-Butadien, oder Gemische von Styrol mit Ethylacrylat und/oder n-Butylacrylat, oder Gemische von Acrylsäureestern wie Ethylacrylat, n-Butylacrylat, 2-Ethylhexylacrylat mit Vinylestern wie Vinylacetat und/oder Vinylester von α-verzweigten Monocarbonsäuren mit 9 bis 11 C-Atomen und gegebenenfalls Ethylen.

Im allgemeinen erfolgt die Monomerauswahl bzw. die Auswahl der Gewichtsanteile der Comonomere so, daß eine Glasübergangstemperatur Tg der Polymerisate von -60°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2^{nd} Edition, J.Wiley & Sons, New York (1975) aufgeführt.

Geeignete polare, ionische Comonomere sind ethylenisch ungesättigte Mono- und Dicarbonsäuren, vorzugsweise Acrylsäure, Methacrylsäure, Itaconsäure, Fumarsäure und Maleinsäure, sowie ethylenisch ungesättigte Sulfonsäuren, vorzugsweise Vinylsulfonsäure, 2-Acrylamido-2-methylpropansulfonsäure. Unter ionische Comonomere sind dabei solche zu verstehen, welche wie die Carbonsäure- oder Sulfonsäure-Gruppe unter bestimmten pH-Bedingungen ionisch vorliegen können. Geeignete polare, nichtionische Comonomere sind ethylenisch ungesättigte Carbonsäureamide und -nitrile, vorzugsweise Acrylamid und Acrylnitril. Am meisten bevorzugte polare, ionische Comonomere sind Acrylsäure und Methacrylsäure. Am meisten bevorzugte polare, nichtionische Comonomere sind Acrylamid, Methacrylamid. Der Anteil an den genannten polaren, ionischen Comonomeren beträgt vorzugsweise 0.2 bis 0.99 Gew.-%. Der Anteil an den genannten polaren, nichtionischen Comonomeren beträgt vorzugsweise 0.5 bis 2.0 Gew.-%, wobei die Anteile in Gew.-% jeweils auf das Gesamtgewicht der Comonomeren bezogen sind.

Bei der Herstellung nach dem Emulsionspolymerisationsverfahren beträgt die Polymerisationstemperatur im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation gebräuchlichen Initiatoren oder Redox-Initiator-Kombinationen. Geeignete organische Initiatoren sind beispielsweise Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew.-%, bezogen auf das Gesamtgewicht der Monomere.

Zur Steuerung des Molekulargewichts können während der Polymerisation regelnde Substanzen eingesetzt werden. Sie werden üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Stabilisierung des Polymerisationsansatzes erfolgt mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0.1 bis 5 Gew.-%, insbesonders 0.5 bis 3 Gew.-%, bezogen auf das Gesamtgewicht der Comonomeren. Geeignete Emulgatoren sind anionische oder nichtionische Emulgatoren oder deren Gemische, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)(EO/PO)-Blockcopolymere bevorzugt mit 8 bis 40 EO- bzw. PO-Einheiten.

Bevorzugt werden Gemische aus anionischem Emulgator und nichtionischem Emulgator eingesetzt. Besonders bevorzugt werden Gemische aus einem Ester oder Halbester der Sulfobernsteinsäure mit einwertigen Alkoholen oder Alkylphenolen mit 4 bis 15 C-Atomen im Alkylrest als anionischem Emulgator und einem Alkylpolyglykolether bevorzugt mit 8 bis 40 EO-Einheiten und Alkylresten mit 8 bis 20 C-Atomen als nichtionischem Emulgator in einem Gewichtsverhältnis von 8 : 1 bis 1 : 8.

Gegebenenfalls können die Emulgatoren auch im Gemisch mit Schutzkolloiden eingesetzt werden. Beispiele hierfür sind ein oder mehrere Schutzkolloide aus der Gruppe umfassend teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere. Falls Schutzkolloide eingesetzt werden, erfolgt dies vorzugsweise in einer Menge von 0.01 bis 1.0 Gew.-%, bezogen auf die Gesamtmenge der Monomere.

Vorzugsweise wird das Ansatzwasser teilweise vorgelegt und der Rest zudosiert, wobei die Zudosierung im Rahmen der Initiatordosierung und der Emulgatordosierung erfolgen kann. Die Vorlage an Wasser wird dabei so bemessen, daß der Emulgatoranteil in der Vorlage 0.001 bis 0.5 Gew.-%, bezogen auf den vorgelegten Wasseranteil beträgt. Werden Schutzkolloide eingesetzt, können diese vor dem Start der Polymerisation vorgelegt werden oder zudosiert werden.

Die Monomere werden bevorzugt in einem Anteil von 1 bis 10 Gew.-% vorgelegt und der Rest nach der Initiierung der Polymerisation zudosiert. Der Anteil an Monomeren aus der Gruppe der polaren, ionischen oder nichtionischen Comonomere beträgt dabei vorzugsweise nicht mehr als 5 Gew.-% bezogen auf das Gesamtgewicht der vorgelegten Monomere.

Zur Initiierung der Polymerisation kann der Initiator teilweise vorgelegt und teilweise dosiert werden, oder insgesamt dosiert werden. Bevorzugt wird die Polymerisation durch Erhitzen des Ansatzes auf Polymerisationstemperatur und Zudosierung des Initiators, vorzugsweise in wassriger Lösung, gestartet. Die Dosierung von Emulgator und Monomeren kann als Gemisch erfolgen, wird aber vorzugsweise separat durchgeführt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem Verfahren erhältlichen wässrigen Dispersionen haben einen Feststoffgehalt von 40 bis 75 Gew.-%, vorzugsweise von 65 bis 75 Gew.-%.

Mit der erfindungsgemäßen Vorgehensweise werden Polymerdispersionen zugänglich, welche sich durch hohe Kohäsionswerte (FINAT-Test Nr. 8: Über 40 min bei 23°C/2 kp) und eine niedere, alterungsstabile Schälfestigkeit (FINAT-Test Nr. 1: Unter 15 N/2.5 cm nach 7 Tagen bei 70°C) hervorragend zur Herstellung von wiederablösbaren Haftklebefilmen eignen. Wie die nachfolgenden Untersuchungen zeigen konnten Dispersionen für Haftkleberanwendung hergestellt werden, die sich praktisch rückstandsfrei wieder ablösen lassen und hohe Kohäsionswerte besitzen. Für den Einsatz als Haftkleber können die Polymerdispersionen mit den dafür üblichen Zusätzen modifiziert werden. Beispiele solcher Zusätze sind Füllstoffe, Pigmente, Weichmacher und Harze. Die Haftkleberdispersion wird im allgemeinen auf Trägermaterialien aufgebracht und in Form von selbstklebenden Materialien wie Etiketten, Klebebändern oder Klebefolien verwendet. Geeignete Trägermaterialien sind Papier oder Kunststofffolien. Die Auftragung erfolgt in bekannter Weise in Beschichtungsanlagen, wobei die Dispersion beispielsweise mit einem Rakel auf den Träger aufgetragen wird und anschließend im Trockenkanal getrocknet wird.

Die Haftkleberdispersionen eignen sich insbesondere zur Herstellung von Etiketten, Klebebändern und Klebefolien.

### Herstellung der Haftkleber-Dispersionen:

### Beispiel 1:

In einem 3-Liter-Dreihalskolben, ausgestattet mit einem Rückflußkühler und Ankerrührer, wurden 325.3 g deionisiertes Wasser, 5.7 g eines Dialkylsulfosuccinats als 20 %-ige wäßrige Lösung (AEROSOL MA, Fa. CYTEC), 0.48 g eines Isotridecylethoxylats mit 15 EO-Einheiten als 40 %-ige wäßrige Lösung (GENAPOL X-150), 2.9 g Acrylamid als 30 %-ige wäßrige Lösung, 1. 9 g Kaliumperoxodisulfat und 74 g Monomermischung von Dos. 1 vorgelegt und unter Stickstoff beim Rühren (Drehzahl 150 U/min.) auf 75°C aufgeheizt. Nach der Temperatureinstellung bei 75°C wurde ca. 25 min. polymerisiert. Anschließend wurde mit den Dosierungen (Dos. 1, 2 und 3) begonnen. Die Dosierzeiten bei Dos. 1 und 2 lag bei 4 Stunden und bei Dos. 3 bei 4.5 Stunden.

### Dosierung 1 (Monomermischung) :

1 400 g Butylacrylat und 92.9 g Methylmethacrylat

### Dosierung 2 (Emulgatormischung):

84.8 g Wasser, 26.1 g Acrylamid (30 %-ig), 123.0 g'Aerosol MA (20 %-ig), 10.3 g Genapol X-150 (40 %-ig)

### Dosierung 3 (Initiatorlösung):

93.9 g Wasser und 2.9 g Kaliumperoxodisulfat

Nach den Dosierungen wurde ca. 2 Stunden bei 75°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 70 Gew.-% und eine Brookfield-Viskosität von 3.260 mPas bei 20 U/min.

### Vergleichsbeispiel 2:

In einem 3-Liter-Dreihalskolben, ausgestattet mit einem Rückflußkühler und Ankerrührer, wurden 234.3 g deionisiertes Wasser, 0.55 g (20 %-ig) AEROSOL MA, 0.05 g (40 %-ig) GENAPOL X-150, und 9 g Monomermischung von Dos. 1 vorgelegt und unter Stickstoff beim Rühren (Drehzahl 150 U/min.) auf 85°C aufgeheizt. Nach der Temperatureinstellung bei 85°C wurde die Initiatorlösung (2.5 g Kaliumperoxodisulfat und 80.4 g Wasser) zugegeben und ca. 15 min. polymerisiert. Anschließend wurde mit den Dosierungen (Dos. 1, 2 und 3) begonnen. Die Dosierzeiten bei Dos. 1 und 2 lagen bei 3. Stunden und bei Dos. 3 bei 3.5 Stunden.

### Dosierung 1 (Monomermischung):

796.6 g Butylacrylat, 121.8 g Methylmethacrylat, 18.8 g Acrylsäure

### Dosierung 2 (Emulgatormischung):

250.2 g Wasser, 60.4 g Aerosol MA (20 %-ig), 5.1 g Genapol X-150 (40 %-ig)

### Dosierung 3 (Initiatorlösung):

80.4 g Wasser, 2.5 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 60 Gew.-% und eine Brookfield-Viskosität von 147 mPas bei 20 U/min.

### Vergleichsbeispiel 3:

In einem 3-Liter-Dreihalskolben, ausgestattet mit einem Rückflußkühler und Ankerrührer, wurden 232.9 g deionisiertes Wasser, 0.6 g AEROSOL MA (20 %-ig), 0,05 g GENAPOL X-150 (40 %-ig), und 9 g Monomermischung von Dos. 1 vorgelegt und unter Stickstoff beim Rühren (Drehzahl 150 U/min.) auf 85°C aufgeheizt. Nach der Temperatureinstellung bei 85°C wurde die Initiatorlösung (2.7 g Kaliumperoxodisulfat und 70.9 g Wasser) zugegeben und ca. 15 min. polymerisiert. Anschließend wurde mit den Dosierungen (Dos. 1, 2 und 3) begonnen. Die Dosierzeiten bei Dos. 1 und 2 lagen bei 3 Stunden und bei Dos. 3 bei 3.5 Stunden.

### Dosierung 1 (Monomermischung):

972.0 g Butylacrylat, 40.5 g Methylmethacrylat, 18.7 g Acrylsäure

### Dosierung 2 (Emulgatormischung):

163.2 g Wasser, 65.2 g Aerosol MA (20 %-ig), 5.5 g Genapol X-150 (40 %-ig)

### Dosierung 3 (Initiatorlösung):

70.9 g Wasser, 2.7 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 65 Gew.-% und eine Brookfield-Viskosität von 3130 mPas bei 20 U/min.

### Beispiel 4:

In einem 3-Liter-Dreihalskolben, ausgestattet mit einem Rückflußkühler und Ankerrührer, wurden 312.7 g deionisiertes Wasser, 2.7 g AEROSOL MA (20 %-ig), 0.2 g GENAPOL X-150 (40 %-ig), 1.7 g Acrylamid (30 %-ig) und 71 g Monomermischung von Dos. 1 vorgelegt und unter Stickstoff beim Rühren (Drehzahl 150 U/min.) auf 80°C aufgeheizt. Nach der Temperatureinstellung bei 80°C wurde die Initiatorlösung (2.9 g Kaliumperoxodisulfat und 63.7 g Wasser) zugegeben und ca. 25 min. polymerisiert. Anschließend wurde mit der Dosierungen (Dos. 1, 2 und 3) begonnen. Die Dosierzeiten bei Dos 1 und 2 lag bei 4 Stunden und bei Dos. 3 bei 4.5 Stunden.

### Dosierung 1 (Monomermischung):

955.7 g Butylacrylat, 43.4 g Methylmethacrylat, 65.2 g Ethylhexylacrylat, 0.5 g Dodecylmercaptan

### Dosierung 2 (Emulgatormischung):

0.2 g Wasser, 90.1 g Aerosol MA (20 %-ig), 7.7 g Genapol X-150 (40 %-ig), 16.3 g Methacrylamid, 16.4 g Acrylamid (30 %-ig).

### Dosierung 3 (Initiatorlösung):

63.7 g Wasser, 2.9 g Kaliumperoxodisulfat

Nach den Dosierungen wurde ca. 2 Stunden bei 80°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 70 Gew.% und eine Brookfield-Viskosität von 940 mPas bei 20 U/min.

### Beispiel 5:

In einem 3-Liter-Dreihalskolben, ausgestattet mit einem Rückflußkühler und Ankerrührer, wurden 232.5 g deionisiertes Wasser, 0.8 g AEROSOL MA (20 %-ig), 0.07 g GENAPOL X-150 (40 %-ig), und 11 g Monomermischung von Dos. 1 vorgelegt und unter Stickstoff beim Rühren (Drehzahl 150 U/min.) auf 75°C aufgeheizt. Nach der Temperatureinstellung bei 75°C wurde die Initiatorlösung (0.7 g Kaliumperoxodisulfat und 14.2 g Wasser) zugegeben und ca. 15 min. polymerisiert. Anschließend wurde mit den Dosierungen (Dos. 1, 2 und 3) begonnen. Die Dosierzeiten bei Dos. 1 und 2 lagen bei. 3 Stunden und bei Dos. 3 bei 3.5 Stunden.

### Dosierung 1 (Monomermischung):

889.6 g Butylacrylat, 40.4 g Methylmethacrylat, 60.7 g Ethylacrylat, 10.1 g Hydroxyethylacrylat

### Dosierung 2 (Emulgatormischung) :

118.0 g Wasser, 85.7 g Aerosol MA (20 %-ig), 7.3 g Genapol X-150 (40 %-ig), 33.7 g Acrylamid (30%-ig),

### Dosierung 3 (Initiatorlösung):

86.7 g Wasser, 2.7 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 65 Gew.-% und eine Brookfield-Viskosität von 1280 mPas bei 20 U/min.

### Vergleichsbeispiel 6:

In einem 3-Liter-Dreihalskolben, ausgestattet mit einem Rückflußkühler und Ankerrührer, wurden 232.4 g deionisiertes Wasser, 0.78 g AEROSOL MA (20 %-ig), 0.07 g GENAPOL X-150 (40 %-ig), und 11 g Monomermischung von Dos. 1 vorgelegt und unter Stickstoff beim Rühren (Drehzahl 150 U/min.) auf 75°C aufgeheizt. Nach der Temperatureinstellung bei 75°C wurde die Initiatorlösung (0.7 g Kaliumperoxodisulfat und 14.2 g Wasser) zugegeben und ca. 15 min. polymerisiert. Anschließend wurde mit den Dosierungen (Dos. 1, 2 und 3) begonnen. Die Dosierzeiten bei Das. 1 und 2 lagen bei 3 Stunden und bei Dos. 3 bei 3.5 Stunden.

### Dosierung 1 (Monomermischung):

879.1 g Butylacrylat, 40.4 g Methylmethacrylat, 60.3 g Ethylacrylat, 20.2 g Hydroxyethylacrylat, 0.5 g Dodecylmercaptan

### Dosierung 2 (Emulgatormischung):

118.2 g Wasser, 85.6 g Aerosol MA (20 %-ig), 7.3 g Genapol X-150 (40%-ig), 33.7 g Acrylamid (30 %-ig)

### Dosierung 3 (Initiatorlösung) :

86.7 g Wasser, 2.7 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 65 Gew.-% und eine Brookfield-Viskosität von 2830 mPas bei 20 U/min.

### Beispiel 7:

In einem 3-Liter-Dreihalskolben, ausgestattet mit einem Rückflußkühler und Ankerrührer, wurden 231.6 g deionisiertes Wasser, 0.8 g AEROSOL MA (20 %-ig), 0.07 g GENAPOL X-150 (40 %-ig), und 11 g Monomermischung von Dos. 1 vorgelegt und unter Stickstoff beim Rühren (Drehzahl 150 U/min.) auf 75°C aufgeheizt. Nach der Temperatureinstellung bei 75°C wurde die Initiatorlösung (0.65 g Kaliumperoxodisulfat und 14.2 g Wasser) zugegeben und ca. 15 min. polymerisiert. Anschließend wurde mit den Dosierungen (Dos. 1, 2 und 3) begonnen. Die Dosierzeiten bei Dos. 1 und 2 lagen bei 3 Stunden und bei Dos. 3 bei 3.5 Stunden.

### Dosierung 1 (Monomermischung):

825.7 g Butylacrylat, 40.3 g Methylmethacrylat, 60.4 g Ethylacrylat, 20.2 g Hydroxyethylacrylat, 0.2 g Dodecylmercaptan, 60.41 g VeoVa 10

### Dosierung 2 (Emulgatormischung):

126.1 g Wasser, 85.1 g Aerosol MA (20 %-ig), 7.2 g Genapol X-150 (40 %-ig), 33.6 g Acrylamid (30 %-ig)

### Dosierung 3 (Initiatorlösung):

86.4 g Wasser, 2.7 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 65 Gew.-% und eine Brookfield-Viskosität von 1020 mPas bei 20 U/min.

### Beispiel 8:

In einem 3-Liter-Dreihalskolben, ausgestattet mit einem Rückflußkühler und Ankerrührer, wurden 232.5 g deionisiertes Wasser, 0.55 g AEROSOL MA (20 %-ig), 0.05 g GENAPOL X-150 (40 %-ig), und 9 g Monomermischung von Dos. 1 vorgelegt und unter Stickstoff beim Rühren (Drehzahl 150 U/min.) auf 75°C aufgeheizt. Nach der Temperatureinstellung bei 75°C wurde die Initiatorlösung (0.6 g Kaliumperoxodisulfat und 19.5 g Wasser) zugegeben und ca. 15 min. polymerisiert. Anschließend wurde mit den Dosierungen (Dos. 1, 2 und 3) begonnen. Die Dosierzeiten bei Dos. 1 und 2 lagen bei 3 Stunden und bei Dos. 3 bei 3.5 Stunden.

### Dosierung 1 (Monomermischung):

878.8 g Butylacrylat, 18.6 g Methylmethacrylat, 9.3 g Acrylsäure, 1.9 g Ethylhexylacrylat

### Dosierung 2 (Emulgatormischung):

234.4 g Wasser, 59.9 g Aerosol MA (20 %-ig), 5.1 g Genapol X-150 (40 %-ig)

### Dosierung 3 (Initiatorlösung) :

79.8 g Wasser, 2.5 g Kaliumperoxodisulfat

Nach den Dosierungen wurde ca. 2 Stunden bei 85°C nachpolymerisiert. Nach der Abkühlung wurde der pH-Wert mit Ammoniaklösung auf 4.5 eingestellt. Die erhaltene Dispersion war nach mikroskopischen Untersuchungen praktisch stippenfrei und hatte einen Feststoffgehalt von 59.5 Gew.-% und eine Brookfield-Viskosität von 248 mPas bei 20 U/min.

### Prüfmethoden:

### Schälfestigkeit (Klebkraft):

Die geprüften Klebstoffdispersionen wurden für die Messungen mit einem Rakel in einer solchen Dicke auf den Träger (Natronkraftpapier) aufgezogen, daß nach dem Trocknen ein gleichmäßiger Polymerfilm von 24 bis 26 g/m² zurückblieb. Die Messung der Schälfestigkeiten wurden in Anlehnung an die FINAT-Testmethode Nr. 1 (FINAT Technisches Handbuch 4. Auflage 1995) durchgeführt. Es wurden Teststreifen mit einer Breite von 25 mm auf einer Glasplatte aufgeklebt und in einem Zugprüfgerät so befestigt, daß der Streifen einen Abzugswinkel von 180° hatte, und mit einer Geschwindigkeit von 300 mm/ min der Teststreifen abgezogen. Die Schälwerte wurden nach 8 Minuten Verklebungszeit bei Raumtemperatur (23°C und 50% relativer Luftfeuchtigkeit) und bei 70°C nach 7 Tagen gemessen, um die Alterung bzw. das Anwachsen der Schälwerte nach längerer Verklebungszeit zu simulieren.

### Scherstandfestigkeit (Kohäsion):

Die geprüften Klebstoffdispersionen wurden für die Messungen mit einem Rakel in einer solchen Dicke auf den Träger (Natronkraftpapier) aufgezogen, daß nach dem Trocknen ein gleichmäßiger Polymerfilm von 24 bis 26 g/m² zurückblieb. Die Klebkraftmessungen wurden in Anlehnung an die FINAT-Testmethode Nr. 8 (FINAT Technisches Handbuch 4. Auflage 1995) durchgefürt. Das mit Haftkleber beschichtete Trägermaterial wurde als Streifen mit 25 mm Breite so auf eine Glasplatte geklebt, daß eine Testfläche von 25 mm x 25 mm in Kontakt mit der Glasplatte war. Das freie Ende des Klebestreifens wurde mit einem Gewicht belastet, und die Zeit bis zum Abscheren des Streifens von der Testplatte bestimmt. Das Belastungsgewicht bei unseren Messungen war 2 kg.

Die Prüfergebnisse sind in Tabelle 1 zusammengefaßt.

Haftkleber ohne polare Comonomere (V.bsp. 3) weisen zwar selbst nach 7 Tage Lagerung bei 70°C geringe Schäfestigkeit auf (gutes Alterungsverhalten), aber die Kohäsionswerte sind unbefriedigend. Mit einem Gehalt von 2 % an polarem, ionischem Comonomer (V.bsp. 2) läßt sich zwar die Kohäsion steigern, gleichzeitig aber steigen die Schälwerte bei Alterung stark an. Die optimale Eigenschaftskombination - hohe Kohäsion und geringe, alterungsbeständige Schälwerte - erhält man mit den Beispielen 1, 4, 5, 7, 8. Auch bei polaren, nichtionischen Comonomeren führt ein zu hoher Gehalt (V.bsp. 6) zu unbefriedigendem Alterungsverhalten der Klebeschicht.

**Tabelle 1:**

| **Beispiel** | **polare Monomere bez. auf Gesamtmonomer [Gew.%]** | | **Kohäsion [min.]** | | **Schälfestigkeit [N/2.5 cm]** | | |
|---|---|---|---|---|---|---|---|
| | | | 23°C/2kp | 50°C/1 kp | 8 min. Verklebungszeit bei 23°C | | 7 Tagen Verklebungszeit bei 70°C |
| **Bsp. 1** | Acrylamid | 0.6 | 115 | 145 | Glas | 6.3 | 9.6 |
| | | | | | Stahl | 6.3 | 9.9 |
| **Vbsp. 2** | Acrylsäure | 2.0 | 348 | > 5000 | Glas | 8.6 | 22 |
| | | | | | Stahl | 7.6 | 21 |
| **Vbsp. 3** | ohne | | 7.1 | 6.3 | Glas | 8.8 | 9.9 |
| | | | | | Stahl | 8.6 | 11 |
| **Bsp. 4** | Methacrylamid | 1.5 | 463 | 1315 | Glas | 7.6 | 8.4 |
| | Acrylamid | 0.5 | | | Stahl | 4.1 | 6.4 |
| **Bsp. 5** | Hydroxyethyl-acrylat | 1.0 | 1555 | >2500 | Glas | 6.8 | 9.1 |
| | Acrylamid | 1.0 | | | Stahl | 4.6 | 11 |
| **Vbsp. 6** | Hydroxyethyl -Acrylat | 2.0 | 223 | >2500 | Glas | 8.7 | Trägerabriß |
| | Acrylamid | 1.0 | | | Stahl | 5.1 | Trägerabriß |
| **Bsp. 7** | Methacrylamid | 1.0 | 935 | >2870 | Glas | 6.0 | 7.7 |
| | Acrylamid | 1.0 | | | Stahl | 5.9 | 9.3 |
| **Bsp. 8** | Acrylsäure | 1.0 | 80 | 162 | Glas | 6.6 | 7.6 |
| | | | | | Stahl | 7.6 | 8.1 |

## Patentansprüche

1. Verfahren zur Herstellung einer wäßrigen Polymerdispersion für wiederablösbare Haftkleberfilme mittels radikalisch initiierter, wäßriger Emulsionspolymerisation von einem oder mehreren ethylenisch ungesättigten Monomeren aus der Gruppe umfassend Ester der Acrylsäure und Methacrylsäure mit unverzweigten oder verzweigten Alkoholen mit 1 bis 12 C-Atomen, Vinylester von unverzweigten oder verzweigten Carbonsäuren mit 1 bis 12 C-Atomen, Vinylaromaten, Vinylhalogenide, Olefine und Diene, wobei vernetzende, multifunktionelle Acrylate und organofunktionelle Silanmonomere ausgeschlossen sind, in solchen Gewichtsanteilen, daß eine Glasübergangstemperatur Tg der Polymerisate von -60°C bis 0°C resultiert, **dadurch gekennzeichnet, daß**
a) 0.01 bis 1.0 Gew.-% eines oder mehrerer, polarer, ionischer Comonomere aus der Gruppe umfassend ethylenisch ungesättigte Mono- und Dicarbonsäure sowie ethylenisch ungesättigte Sulfonsäuren, oder
b) 0.01 bis 2.0 Gew.-% eines oder mehrerer, polarer, nichtionischer Comonomere aus der Gruppe umfassend ethylenisch ungesättigte Carbonsäureamide und -nitrile oder
c) 0.01 bis 2.0 Gew.-% deren Gemische copolymerisiert werden, wobei bei der Copolymerisation von polaren, ionischen Comonomeren im Gemisch, deren Anteil maximal 1.0 Gew.-% beträgt, und die Angaben in Gew.-% jeweils auf das Gesamtgewicht der Comonomere bezogen sind.

2. Verfahren nach Anspruch 1, **dadurch gekennzeichnet, daß** der Anteil der Ester der Acrylsäure und Methacrylsäure mit unverzweigten oder verzweigten Alkoholen mit 1 bis 12 C-Atomen ≥ 50 Gew.-%, bezogen auf das Gesamtgewicht der Comonomere beträgt.

3. Verfahren nach Anspruch 1 und 2, **dadurch gekennzeichnet, daß** als Comonomergemische, welche die genannten Anteile an polaren ionischen und nichtionischen Comonomeren enthalten, solche mit Ethylacrylat oder n-Butylacrylat oder 2-Ethylhexylacrylat, oder Gemische von Methylmethacrylat mit n-Butylacrylat und/oder 2-Ethylhexylacrylat, oder Gemische von Methylmethacrylat mit n-Butylacrylat und/oder Ethylacrylat, oder Gemische von Methylmethacrylat mit 1,3-Butadien, oder Gemische von Styrol mit Ethylacrylat und/oder n-Butylacrylat, oder Gemische von Acrylsäureestern wie Ethylacrylat, n-Butylacrylat, 2-Ethylhexylacrylat mit Vinylestern wie Vinylacetat und/oder Vinylester von α-verzweigten Monocarbonsäuren mit 9 bis 11 C-Atomen und gegebenenfalls Ethylen, polymerisiert werden.

4. Verfahren nach Anspruch 1 bis 3, **dadurch gekennzeichnet, daß** als polare, ionische Comonomere Acrylsäure und Methacrylsäure und als polare, nichtionische Comonomere Acrylamid, Methacrylamid, oder Gemische der genannten Comonomere copolymerisiert werden.

5. Verfahren nach Anspruch 1 bis 4, **dadurch gekennzeichnet, daß** der Anteil an polaren, ionischen Comonomeren 0.2 bis 0.99 Gew.-% und der Anteil an polaren, nichtionischen Comonomeren mindestens 0.5 Gew.-% beträgt, wobei die Anteile in Gew.-% jeweils auf das Gesamtgewicht der Comonomeren bezogen sind.

6. Verwendung der Verfahrensprodukte nach Anspruch 1 bis 5 als Haftkleber.

7. Verwendung nach Anspruch 6, **dadurch gekennzeichnet, daß** der Haftkleber zur Herstellung von Etiketten, Klebebändern und Klebefolien verwendet wird.

## Claims

1. Process for preparing an aqueous polymer dispersion for redetachable pressure-sensitive adhesive films by means of free-radically initiated aqueous emulsion polymerization of one or more ethylenically unsaturated monomers from the group consisting of esters of acrylic acid and methacrylic acid with branched or unbranched alcohols having 1 to 12 carbon atoms, vinyl esters of branched or unbranched carboxylic acids having 1 to 12 carbon atoms, vinylaromatics, vinyl halides, olefins and dienes, excluding crosslinking, multifunctional acrylates and organofunctional silane monomers, in proportions by weight such that a glass transition temperature Tg of the polymers from -60°C to 0°C results, **characterized in that**
a) 0.01 to 1.0% by weight of one or more polar, ionic comonomers from the group comprising ethylenically unsaturated mono- and dicarboxylic acid and ethylenically unsaturated sulphonic acids, or
b) 0.01 to 2.0% by weight of one or more polar, nonionic comonomers from the group comprising ethylenically unsaturated carboxamides and carbonitriles, or
c) from 0.01 to 2.0% by weight thereof are copolymerized, and if polar ionic comonomers in a mixture are copolymerized, the proportion thereof is not more than 1.0% by weight, and the amounts in % by weight are based in each case on the overall weight of the comonomers.

2. Process according to Claim 1, **characterized in that** the proportion of the esters of acrylic acid and methacrylic acid with branched or unbranched alcohols having 1 to 12 carbon atoms is ≥ 50% by weight, based on the overall weight of the comonomers.

3. Process according to Claim 1 or 2, **characterized in that** as comonomer mixtures containing the specified proportions of polar ionic and nonionic comonomers, those including ethyl acrylate or n-butyl acrylate or 2-ethylhexyl acrylate, or mixtures of methyl methacrylate with n-butyl acrylate and/or 2-ethylhexyl acrylate, or mixtures of methyl methacrylate with n-butyl acrylate and/or ethyl acrylate, or mixtures of methyl methacrylate with 1,3-butadiene, or mixtures of styrene with ethyl acrylate and/or n-butyl acrylate, or mixtures of acrylic esters such as ethyl acrylate, n-butyl acrylate, 2-ethylhexyl acrylate with vinyl esters such as vinyl acetate and/or vinyl esters of α-branched monocarboxylic acids having 9 to 11 carbon atoms and, if desired, ethylene are polymerized.

4. Process according to any of Claims 1 to 3,
**characterized in that** polar ionic comonomers copolymerized are acrylic acid and methacrylic acid and polar nonionic comonomers copolymerized are acrylamide, methacrylamide, or mixtures of said comonomers.

5. Process according to any of Claims 1 to 4,
**characterized in that** the proportion of polar ionic comonomers is from 0.2 to 0.99% by weight and the proportion of polar nonionic comonomers is at least 0.5% by weight, the proportions in % by weight being based in each case on the overall weight of the comonomers.

6. Use of the process products according to any of Claims 1 to 5 as a pressure-sensitive adhesive.

7. Use according to Claim 6, **characterized in that** the pressure-sensitive adhesive is used to produce labels, adhesive tapes or adhesive sheets.

## Revendications

1. Procédé pour la préparation d'une dispersion aqueuse de polymère pour pellicules d'adhésif de contact redétachables, par polymérisation en émulsion aqueuse à amorçage radicalaire d'un ou plusieurs monomères à insaturation éthylénique choisis dans le groupe comprenant des esters de l'acide acrylique et de l'acide méthacrylique avec des alcools ramifiés ou non ramifiés ayant de 1 à 12 atomes de carbone, des esters vinyliques d'acides carboxyliques ramifiés ou non ramifiés ayant de 1 à 12 atomes de carbone, des composés vinylaromatiques, des halogénures de vinyle, des oléfines et des diènes, à l'exclusion de monomères de type silane à fonction organique et d'acrylates polyfonctionnels susceptibles de réticulation, en proportions en poids telles qu'il en résulte une température de transition vitreuse Tv des polymères de -60°C à 0°C, **caractérisé en ce que**
a) de 0,01 à 1,0 % en poids d'un ou plusieurs comonomères ioniques polaires choisis dans le groupe comprenant des acides mono- et dicarboxyliques à insaturation éthylénique ainsi que des acides sulfoniques à insaturation éthylénique, ou
b) de 0,01 à 2,0 % en poids d'un ou plusieurs comonomères non ioniques polaires choisis dans le groupe comprenant des amides et nitriles d'acides carboxyliques à insaturation éthylénique, ou
c) de 0,01 à 2,0 % en poids de mélanges de ceux-ci,
sont copolymérisés, dans le cas de la copolymérisation de comonomères ioniques polaires en mélange, leur proportion étant au maximum de 1,0 % en poids, et les données en % en poids étant chacune par rapport au poids total des comonomères.

2. Procédé selon la revendication 1, **caractérisé en ce que** la proportion des esters de l'acide acrylique et de l'ester méthacrylique avec des alcools ramifiés ou non ramifiés ayant de 1 à 12 atomes de carbone est ≥ 50 % en poids, par rapport au poids total des comonomères.

3. Procédé selon les revendications 1 et 2, **caractérisé en ce que**, en tant que mélanges de comonomères qui contiennent les quantités citées de comonomères ioniques polaires et de comonomères non ioniques polaires, sont polymérisés ceux avec l'acrylate d'éthyle ou l'acrylate de n-butyle ou l'acrylate de 2-éthylhexyle, ou des mélanges de méthacrylate de méthyle avec l'acrylate de n-butyle et/ou l'acrylate de 2-éthylhexyle, ou des mélanges de méthacrylate de méthyle avec l'acrylate de n-butyle et/ou l'acrylate d'éthyle, ou des mélanges de méthacrylate de méthyle avec le 1,3-butadiène, ou des mélanges de styrène avec l'acrylate d'éthyle et/ou l'acrylate de n-butyle, ou des mélanges d'esters d'acide acrylique, tels que l'acrylate d'éthyle, l'acrylate de n-butyle, l'acrylate de 2-éthylhexyle, avec des esters vinyliques tels que l'acétate de vinyle et/ou des esters vinyliques d'acides monocarboxyliques α-ramifiés ayant de 9 à 11 atomes de carbone et éventuellement l'éthylène.

4. Procédé selon l'une quelconque des revendications 1 à 3, **caractérisé en ce que** sont copolymérisés en tant que comonomères ioniques polaires, l'acide acrylique et l'acide méthacrylique, et, en tant que comonomères non ioniques polaires, l'acrylamide, le méthacrylamide, ou des mélanges des comonomères cités.

5. Procédé selon l'une quelconque des revendications 1 à 4, **caractérisé en ce que** la proportion des comonomères ioniques polaires va de 0,2 à 0,99 % en poids et la proportion des comonomères non ioniques polaires est d'au moins 0,5 % en poids, les proportions en % en poids étant chacune par rapport au poids total des comonomères.

6. Utilisation des produits obtenus par le procédé selon l'une quelconque des revendications 1 à 5, en tant qu'adhésif de contact.

7. Utilisation selon la revendication 6, **caractérisée en ce que** l'adhésif de contact est utilisé pour la fabrication d'étiquettes, de rubans adhésifs et de pellicules adhésives.
